# EUROPÄISCHE PATENTANMELDUNG

(11) **EP 2 080 936 A2**
(43) Veröffentlichungstag der Anmeldung: **22.07.2009**
(21) Anmeldenummer: 09000383.1
(22) Anmeldetag: 14.01.2009
(51) Int. Cl.: F16H 55/06

(54) **Sinterzahnrad**

(30) Priorität: 16.01.2008 AT 272008 U
(71) Anmelder: Miba Sinter Austria GmbH, 4663 Laakirchen (AT)
(72) Erfinder: Schmid, Herbert, 4655 Vorchdorf (AT); Dickinger, Karl, 4655 Vorchdorf (AT); Siessl, Wolfgang, 4801 Traunkirchen (AT)
(74) Vertreter: Ofner, Clemens

(57) **Zusammenfassung**

Die Erfindung betrifft ein Sinterzahnrad (I) mit Zähnen (2), zwischen denen jeweils ein Zahngrund (5) ausgebildet ist. Der Zahngrund (5) weist eine Oberfläche auf, die thermomechanisch nachbearbeitet ist und eine Oberflächenrauhigkeit mit einem arithmetischen Mittenrauwert Ra, gemessen nach DIN EN ISO 4287, aufweist, der ausgewählt ist aus einem Bereich mit einer unteren Grenze von 0,2 µm und einer oberen Grenze von 2,0 µm.

## Beschreibung

Die Erfindung betrifft ein Sinterzahnrad mit Zähnen, zwischen denen jeweils ein Zahngrund ausgebildet ist, sowie ein Verfahren zur Herstellung des Sinterzahnrades mit verbesserter mechanischer Belastbarkeit.

Bauteile, die über herkömmliche schmelzmetallurgische Wege hergestellt werden, werden immer häufiger durch pulvermetallurgisch hergestellte Bauteile ersetzt, nicht zuletzt deswegen, da letztere in komplexeren Geometrien einfacher herstellbar sind. Herstellungsbedingt weisen jedoch Sinterbauteile ohne zusätzliche Behandlung eine geringere mechanische Festigkeit auf, bedingt durch die Restporosität dieser Sinterbauteile. Zum einen ist diese Restporosität gewünscht, beispielsweise für Sinterbauteile, welche in schmierenden Systemen verwendet werden, wobei in diesem Fall die Poren als Reservoir für Schmiermittel herangezogen werden können. Zur Verbesserung der mechanischen Belastbarkeit wurden im Stand der Technik auch schon verschiedenste Methoden beschrieben, um diese Restporosität zu verringern, beispielsweise durch Oberflächenverdichtung von Zahnrädern durch radiales Pressen oder Walzen. Bislang stand jedoch die Zahnflankenbehandlung durch Oberflächenhärten oder Oberflächenverdichtung zur Erhöhung der mechanischen Belastbarkeit im Vordergrund bzw. wurde die Härte im Zahnfußbereich zur Verbesserung der mechanischen Eigenschaften bewusst reduziert.

So beschreibt z. B. die DE 10 03 779 A1 hochfeste, auf Oberflächenpressung und auf Verbiegung beanspruchte, einsatzgehärtete Zahnräder mit günstigen Festigkeitseigenschaften gegenüber Dauerbiegebeanspruchung. Dazu weisen die auf Biegung beanspruchten Zonen, also die Zahnfußpartien, eine gegenüber den Zahnflanken niedrigere Oberflächenhärte bzw. Einsatztiefe auf, wobei die Oberflächenhärte in der Zahnfußpartie etwa in den Grenzen zwischen 48 und 58 HRc liegt. Zur Herstellung dieser Zahnräder werden diese zunächst nach einem an sich bekannten Verfahren einsatzgehärtet und nach dem Härten ein Teil der Härteschicht am Zahnfuß wieder abgetragen, und zwar unter Wahrung eines möglichst gleichmäßigen Übergangs der Härtewerte vom Zahnfuß zum aktiven Zahnflankenprofil, beispielsweise durch Schleifen.

Aus der DE 25 56 170 A1 ist ein Verfahren zur Erhöhung der Zahnfußfestigkeit von mindestens hinsichtlich der Zahnflanken gehärteten und/oder hochvergüteten Zahnrädern bekannt, bei denen der Übergangsbereich von den Zahnflanken auf den jeweils benachbarten Zahngrund gerundet ist. Die Feingestalt des gerundeten Übergangs wird dabei durch eine quer zur Längserstreckung der Zähne gerichtete Oberflächenbearbeitung erzeugt, beispielsweise durch Schleifen und/oder Polieren. Es soll damit erreicht werden, dass die Bearbeitungsriefen quer zur Längsrichtung der Zähne verlaufen, sodass diese in der Ebene der Kraftangriffsrichtung auf die Zähne und nicht mehr senkrecht dazu liegen. Damit wird die Kerbempfindlichkeit im Zahnfußbereich herabgesetzt und die Tragfähigkeit des Zahnrades heraufgesetzt.

Aus der DE 1179 081 A1 ist ein Verfahren bekannt, bei dem man zur Vermeidung von Schleifrissen am Zahnfuß von Zahnrädern den Zahngrund und die anschließenden Hohlkehlen zum Zahngrund und den Zahnflanken ausschleift und gegebenenfalls poliert.

Die DE 29 34 413 A1 beschreibt schließlich ein Verfahren zur gleichzeitigen Zahngrundbearbeitung durch Schleifen in Verbindung mit dem Teilwälzschleifen der Zahnflanken.

Bei Sinterzahnrädern wurde eine derartige Nachbearbeitung des Zahnfußes bislang nicht durchgeführt, einerseits um die Oberflächenhärte, wie in der oben genannten DE 10 03 779 A1 beschrieben, nicht zu verringern bzw. auch um die Poren im Zahnfußbereich als "Schmiermitteltaschen" heranziehen zu können.

Aufgabe der vorliegenden Erfindung ist es, die mechanische Belastbarkeit eines Sinterzahnrades zu verbessern.

Diese Aufgabe wird bei dem erfindungsgemäßen Sinterzahnrad dadurch gelöst, dass der Zahngrund eine Oberfläche aufweist, die thermomechanisch nachbearbeitet ist und eine Oberflächenrauhigkeit mit einem arithmetischen Mittenrauwert Ra, gemessen nach DIN EN ISO 4287 aufweist, der ausgewählt ist aus einem Bereich mit einer unteren Grenze von 0,2 µm und einer oberen Grenze von 2,0 µm, sowie durch ein Verfahren zur Herstellung des Sinterzahnrades nach dem dessen Zahngrund solange thermomechanisch nachbearbeitet wird, bis der Zahngrund diese Oberflächenrauhigkeit aufweist. Überraschender Weise wurde festgestellt, dass die thermemechanische Nachbearbeitung des Zahngrundes nicht nur eine Verbesserung der Zahnbruchfestigkeit durch Vermeidung von Schleifrissen erreicht werden kann, sondern dass, insbesondere bei unzureichender Kühlung der Bearbeitungsfläche, durch die thermemechanische Nachbearbeitung in dieser Oberfläche des Zahngrundes Spannungen induziert werden, wodurch das Eigenspannungsprofil in diesem Bereich und damit die mechanische Belastbarkeit eines Sinterzahnrades erhöht werden kann. Die Festigkeit steigt dabeiim Vergleich zu nicht nachbearbeiteten Sinterzahnrädern - um bis zu 20 %. Es werden damit Festigkeiten aufgrund der induzierten Druckeigenspannungen erreicht, die nahe an jenen vom Vollmaterial liegen, insbesondere kann der Abstand zwischen Vollstahlzahnrädern und Zahnrädern aus Sinterwerkstoffen von derzeit 20 % geringere mechanische Festigkeit auf bis zu 10 % reduziert werden. Es werden also mit dem erfindungsgemäßen Sinterzahnrad Festigkeiten erzielt, die mit jenen von Vollzahnrädern vergleichbar sind, wodurch die Einsatzbreite derartiger Sinterzahnräder erhöht werden kann. Durch die thermomechanische Nachbearbeitung bei unzureichender Kühlung wird gleichzeitig eine plastomechanische Randschichtverfestigung erreicht, wodurch auch die Porosität in diesen Randschichten verringert werden kann. Es kann also damit eine zusätzliche Oberflächenverdichtung erzielt werden bzw. generell eine Oberflächenverdichtung durchgeführt werden, wenn diese nicht bereits vor der thermomechanischen Nachbearbeitung erfolgt ist. Darüber hinaus ist es durch diese Nachbearbeitung möglich, die Genauigkeit der Zahngeometrie zu erhöhen, wodurch das Spiel von miteinander kämmenden Zahnrädern reduziert werden kann und damit auch ein derartiger Antrieb verbesserte Akustikeigenschaften, d. h. einen geringen Geräuschpegel, aufweist. Von Vorteil ist auch, dass durch die "Kaltverfestigung" die Temperaturbelastung in diesem Oberflächenbereich relativ gering ist, sodass keine Rekristallisationserscheinungen und damit kein Spannungsabfall auftreten. Darüber hinaus ist es mit diesem Verfahren möglich, das Herstellungsverfahren von derartigen Sinterzahnrädern kostengünstiger durchzuführen, da auf das bislang übliche Strahlen dieser Oberfläche verzichtet werden kann. Gleichzeitig wird mit dieser Nachbearbeitung eine Reduzierung von Flitter erreicht, der aus dem Walzprozess der Zahnflanken stammt. Zudem können damit gleichzeitig gegebenenfalls spröde Hartschichten auf der Oberfläche entfernt werden.

Die Oberflächenrauhigkeit weist insbesondere auch einen arithmetischen Mittenrauwert Ra auf, gemessen nach DIN EN ISO 4287, der ausgewählt ist aus einem Bereich mit einer unteren Grenze von 0,6 µm und einer oberen Grenze von 1,2 µm.

Zur Erhöhung der mechanischen Festigkeit und zur weiteren Verbesserung der Akustikwerte ist es von Vorteil, wenn die Oberfläche des Zahngrundes des Sinterzahnrades eine maximale Rauheitsprofilhöhe R3z, gemessen nach DBN 31007, aufweist, die ausgewählt ist aus einem Bereich mit einer unteren Grenze von 0,5 µm und einer oberen Grenze von 8 µm.

Insbesondere weist die Oberfläche des Zahngrundes eine maximale Rauheitsprofilhöhe R3z auf, gemessen nach DBN 31007, die ausgewählt ist aus einem Bereich mit einer unteren Grenze von 1 µm und einer oberen Grenze von 5 µm.

Von Vorteil für die Belastbarkeit und zur Erhöhung der Standzeit des Sinterzahnrades ist es auch, wenn der Zahngrund oberflächlich zumindest annähernd die gleiche Härte aufweist, wie die Oberfläche der daran anschließenden Zahnflanken bzw. der daran anschließenden Ausrundungen der Übergänge zu den Zahnflanken.

Weiters ist gemäß einer Ausführungsvariante des Sinterzahnrades vorgesehen, dass die Oberfläche des Zahngrundes eine Restporosität von maximal 12 % aufweist. Überraschenderweise wurde gefunden, dass eine derart geringe Restporosität die Schmierung eines mit einem erfindungsgemäßen Sinterzahnrad versehenen Zahnradantriebes noch ausreichend unterstützt, sodass im Zusammenhang mit der damit erreichten verbesserten mechanischen Belastbarkeit, das heißt der Festigkeit des Sinterzahnrades, die Standzeit desselben weiter verbessert werden kann.

In einer Ausführungsvariante des erfindungsgemäßen Verfahrens ist vorgesehen, dass die thermomechanische Nachbearbeitung mit einem Schleifmittel durchgeführt wird, das eine Körnung aufweist, die ausgewählt ist aus einem Bereich mit der unteren Grenze von 50 und einer oberen Grenze von 150. Insbesondere mit Schleifmittelkörnungen ausgewählt aus diesem Bereich konnte eine weitere Erhöhung der induzierten Eigenspannung festgestellt werden.

Von Vorteil ist es dabei, wenn die Nachbearbeitung mit einem Schleifmittel durchgeführt wird, das eine Körnung aufweist, die ausgewählt ist aus einem Bereich mit einer unteren Grenze von 70 und einer oberen Grenze von 110, bzw. eine Körnung von 90 hat.

Zum besseren Verständnis der Erfindung wird diese anhand der nachfolgenden Figur näher erläutert.

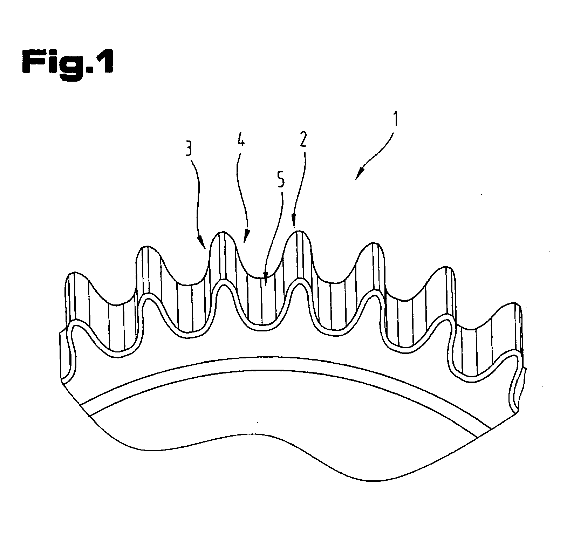

Es zeigt
- Fig. 1: einen schematischen Ausschnitt aus dem Verzahnungsbereich eines Sinterzahnrades.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfmdungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Fig. 1 zeigt einen Ausschnitt aus einem Sinterzahnrad 1. Dieses Sinterzahnrad 1 weist Zähne 2 auf, die über einen äußeren Umfang des Sinterzahnrades 1 verteilt angeordnet sind.

Unter Sinterzahnrad im Sinne der Erfindung wird ein Zahnrad verstanden, das aus einem Sinterwerkstoff hergestellt worden ist. Als Werkstoffe hierfür kommen insbesondere Aluminium, Eisen, Kupfer, Magnesium, Titan sowie deren Legierungen in Frage. Beispiele für derartige Sintermetalllegierungen sind aus der DIN V 30 910 Teil 4, Seite 3 zu entnehmen. Insbesondere wird ein Sinterstahl verwendet, der zumindest eines der Elemente Kupfer, Nickel, Mangan, Chrom, Silizium, Molybdän, Vanadium enthält. Weiters kann dieser Sinterstahl Kohlenstoff in einem Ausmaß von bis zu 0,65 Gew.-% enthalten. Beispielsweise können Sinterstähle verwendet werden mit folgender Zusammensetzung: Kohlenstoff 0,2 Gew.-%, Magnesium < 0,1 Gew.-%, Molybdän 0,85 Gew.-%, Rest Eisen mit herstellungsbedingten Verunreinigungen oder Kohlenstoff 0,3 Gew.-%, Chrom 1,5 Gew.-%, Molybdän 0,25 Gew.-%, Rest Eisen mit herstellungsbedingten Verunreinigungen.

Diesen Pulvern können Bearbeitungshilfsstoffe für die Sinterbauteile, wie z.B. Mangansulfid, zugesetzt sein.

Sämtliche Angaben zur Zusammensetzung sind dabei auf die fertige Legierung bezogen.

Zur Herstellung dieser Legierungspulver können die einzelnen Metalle miteinander vermischt werden ebenso ist es möglich, bereits vorlegierte Pulver einzusetzen.

Da dem Fachmann die prinzipielle Herstellung von Sinterbauteilen bekannt ist, sei an dieser Stelle an die einschlägige Literatur verwiesen. Insbesondere umfasst die Herstellung von Sinterbauteilen die Verfahrensschritte Mischung des Pulvers, ggf. mit Zusatz- und Hilfsstoffen, wie z.B. Gleit- bzw. Schmiermitteln, Pulververdichtung zu einen Grünling, Sintern des Grünlings, ggf. Kalibrierung und/oder Nachverdichtung des gesinterten Bauteils. Ebenso kann die Herstellung das Einsatzhärten bzw. Anlassen derartiger Bauteile umfassen.

Wie bekannt, weisen die Zähne 2 jeweils eine linke und eine rechte Zahnflanke 3, 4 sowie einen an diese anschließenden Zahngrund 5 auf. Die beiden Zahnflanken 3, 4 sind bevorzugt geschliffen.

Erfindungsgemäß ist nunmehr vorgesehen, dass der Zahngrund 5 thermomechanisch nachbearbeitet wird, insbesondere durch Schleifen und/oder durch Honen. Das Schleifen oder Honen wird dabei in axialer Richtung des Sinterzahnrades 1 durchgeführt. Dadurch wird eine Oberflächenrauhigkeit des Sinterzahnrades im Bereich des Zahngrundes 5 erreicht, mit einem arithmetischen Mittenrauwert Ra entsprechend voranstehenden Ausführungen. Bevorzugt ist eine maximale Rauheitsprofile R3z im Bereich des Zahngrundes 5 aus oben genanntem Bereich ausgewählt.

Auch die beiden Zahnflanken 3, 4 können diese Werte für den Mittenrauwert sowie ggf. die Rauheitsprofilhöhe aufweisen.

Wie aus Fig. 1 ersichtlich ist, kann die Kante im Bereich des Überganges von der Oberfläche der Zähne im Bereich der Zahnflanke 3, 4 sowie den Zahngrund 5 auf die Oberfläche in radialer Richtung des Sinterzahnrades 1 gebrochen sein, wodurch ebenfalls die Belastbarkeit des Sinterzahnrades 1 erhöht werden kann, insbesondere der Eingriff für ein weiteres kämmendes Sinterzahnrad 1 erleichtert werden.

Folgende Versuche wurden während der Erprobung der Erfindung durchgeführt.

### Ausführungsbeispiel 1

Für die Herstellung eines erfindungsgemäßen Sinterzahnrades 1 wurde ein Legierungspulver folgender Zusammensetzung verwendet:

Kohlenstoff 0,2 Gew.-%, Magnesium < 0,1 Gew.-%, Molybdän 0,85 Gew.-%, Rest Eisen mit herstellungsbedingten Verunreinigungen.

Dieses Legierungspulver wurde mit einem Druck von 700 MPa zu einem Grünling verpresst, und anschließend bei einer Temperatur im Bereich zwischen 1100°C und 1350°C gesintert. Danach erfolgte mit Hilfe einer Matrize eine Kalibrierung des Sinterzahnrades 1, in dem dieses durch die Matrize hindurchgepresst wurde.

Alternativ zum Durchpressen kann das Bauteil in die Richtung des Einbringens in die Matrize aus dieser ausgestoßen werden.

Das so hergestellte Sinterzahnrad 1 wies eine Kerndichte von ca. 6,9 g/cm³ und eine Oberflächendichte von größer 7,4 g/cm³ auf.

Es sei darauf hingewiesen, dass das gesamte Sinterzahnrad 1 zumindest annähernd die Kerndichte aufweisen kann, wenn ein nicht verdichteter Werkstoff verarbeitet wird.

Anschließend an die Oberflächenverdichtung, d. h. die Kalibrierung, und gegebenenfalls einer thermochemischen Behandlung bzw. Härtung, wurden die Zahnflanken 3, 4 sowie der Zahngrund 5 mit einem Schleifmittel der Körnung 90 geschliffen.

Mit Hilfe des Pulsatortestes konnte an diesem Sinterzahnrad 1 eine Zahnfußfestigkeit von 870 MPa gemessen werden.

Im Vergleich dazu wurde ein Sinterzahnrad hergestellt, welches mit Ausnahme der des Schleifens des Zahngrundes 5 sämtliche Verfahrensschritte umfasste. Dieses Vergleichszahnrad zeigte im Pulsatortest eine Zahnfußfestigkeit von 700 MPa - 750 MPa.

Im Vergleich dazu weist ein Zahnrad aus Vollstahl, also schmelzmetallurgisch hergestellt, eine Zahnfußfestigkeit von 920 MPa auf.

### Ausführungsbeispiel 2

In analoger Weise zum Ausführungsbeispiel 1 wurde ein Sinterzahnrad 1 hergestellt, wobei darauf geachtet wurde, dass die Oberfläche der Zahnflanken 3, 4 und des Zahngrundes 5 in etwa die gleiche Härte aufwiesen. Diese Härte betrug zwischen 650 HV0,1 und 870 HV0,1. Der Pulsatortest ergab die selben Relationen wie zu Ausführungsbeispiel 1 beschrieben.

Sowohl das Sinterzahnrad 1 nach Ausführungsbeispiel 1 als auch nach Ausführungsbeispiel 2 wies im Bereich der Oberfläche der Zahnflanken 3, 4 und des Zahngrundes 5 eine Restporosität von max. 12 % auf. Insbesondere betrug die Restporosität beim Ausführungsbeispiel 1 5,1 %, bei jenen nach Ausführungsbeispiel 2 4,5 %.

### Ausführungsbeispiel 3

Es wurde im Wesentlichen das Ausführungsbeispiel 1 wiederholt, wobei ein Schleifmittel der Körnung 90 verwendet wurde, sodass die Oberfläche des Zahngrundes 5 eine max. Rauheitsprofilhöhe R3z nach DBN 31007 von 4,2 µm aufwies. Der Pulsatortest ergab die selben Relationen wie zu Ausführungsbeispiel 1 beschrieben.

### Weitere Ausführungsbeispiele

Das Ausführungsbeispiel 1 wurde mehrfach wiederholt, wobei die Oberflächenrauigkeit in den Grenzen 0,2 µm bis 3,0 µm und die max. Rauheitsprofilhöhe in den Grenzen 0,3 µm bis 15 µm variiert wurde. Es wurde dabei festgestellt, dass sich besondere mechanische Belastbarkeiten in den Grenzen von 0,2 µm bis 2,0 µm für Ra und von 0,5 µm bis 8 µm für R3z ergaben.

Neben der Festigkeitssteigerung tritt bei dem erfindungsgemäßen Verfahren der Nebeneffekt auf, dass damit auch Verzahnungsfehler aus der Herstellung zumindest großteils ausgeglichen werden können.

Durch die thermomechanische Nachbearbeitung erfolgt eine Temperaturbelastung der Oberfläche, die ausgewählt ist aus einem Bereich mit einer unteren Grenze von 10 °C und einer oberen Grenze von 250 °C. Insbesondere wird das Verfahren mit unzureichender bzw. ohne Kühlung der Bearbeitungsfläche, also des Zahngrundes 5 und/oder der Zahnflanken 3, 4, durchgeführt.

Das Ausführungsbeispiel zeigt eine mögliche Ausführungsvariante des Sinterzahnrades 1, wobei an dieser Stelle bemerkt sei, dass die Erfindung nicht auf die speziell dargestellten Ausführungsvariante eingeschränkt ist, sondern vielmehr auch andere Ausführungsvarianten, wie z.B. Schrägverzahnungen, Kegelverzahnungen, Stirnverzahnungen, etc., möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der beschriebenen Ausführungsvariante möglich sind, vom Schutzumfang mit umfasst.

Der Ordnung halber sei abschließend darauf hingewiesen, dass zum besseren Verständnis des Aufbaus des Sinterzahnrades 1 dieses teilweise unmaßstäblich und/oder vergrößert und/oder verkleinert dargestellt wurden.

### Bezugszeichenaufstellung

- 1: Sinterzahnrad
- 2: Zahn
- 3: Zahnflanke
- 4: Zahnflanke
- 5: Zahngrund

## Patentansprüche

1. Sinterzahnrad (1) mit Zähnen (2), zwischen denen jeweils ein Zahngrund (5) ausgebildet ist, **dadurch gekennzeichnet, dass** der Zahngrund (5) eine Oberfläche aufweist, die thermomechanisch nachbearbeitet ist und eine Oberflächenrauhigkeit mit einem arithmetischen Mittenrauwert Ra, gemessen nach DIN EN ISO 4287, aufweist, der ausgewählt ist aus einem Bereich mit einer unteren Grenze von 0,2 µm und einer oberen Grenze von 2,0 µm.

2. Sinterzahnrad (1) nach Anspruch 1, **dadurch gekennzeichnet, dass** die Oberfläche des Zahngrundes (5) eine maximale Rauheitsprofilhöhe R3z, gemessen nach DBN 31007, aufweist, die ausgewählt ist aus einem Bereich mit einer unteren Grenze von 0,5 µm und einer oberen Grenze von 8 µm.

3. Sinterzahnrad (1) nach Anspruch 1 oder 2, **dadurch gekennzeichnet, dass** der Zahngrund (5) oberflächlich zumindest annähernd die gleiche Härte aufweist, wie die Oberflächen der Zahnflanken.

4. Sinterzahnrad (1) nach einem der Ansprüche 1 bis 3, **dadurch gekennzeichnet, dass** die Oberfläche des Zahngrundes (5) eine Restporosität von maximal 12 % aufweist.

5. Verfahren zur Herstellung eines Sinterzahnrades (1) mit verbesserter mechanischer Belastbarkeit, wobei das Sinterzahnrad (1) Zähne (2) aufweist, zwischen denen jeweils ein Zahngrund (5) ausgebildet ist, **dadurch gekennzeichnet, dass** der Zahngrund (5) solange thermomechanisch nachbearbeitet wird, bis dessen Oberfläche eine Oberflächenrauhigkeit mit einem arithmetischen Mittenrauwert Ra, gemessen nach DIN EN ISO 4287, aufweist, der ausgewählt ist aus einem Bereich mit einer unteren Grenze von 0,2 µm und einer oberen Grenze von 2,0 µm.

6. Verfahren nach Anspruch 5, **dadurch gekennzeichnet, dass** die thermomechanische Nachbearbeitung mit einem Schleifmittel durchgeführt wird, das eine Körnung aufweist, die ausgewählt ist aus einem Bereich mit einer unteren Grenze von 50 und einer oberen Grenze von 150.
